# EUROPEAN PATENT APPLICATION

(11) **EP 4 745 808 A1**
(43) Date of publication of application: **20.05.2026**
(21) Application number: 24842291.7
(22) Date of filing: 12.07.2024
(51) Int. Cl.: G06F 21/31, G06F 21/55, G06F 11/36, G06N 3/092, G06N 3/0442

(54) **INTERACTIVE ATTACK TEST AND OPTIMIZATION**

(30) Priority: 14.07.2023 CN 202310868829
(71) Applicant: Alipay (Hangzhou) Digital Service Technology Co., Ltd., Hangzhou, Zhejiang 310000 (CN)
(72) Inventor: LI, Ruoyu, Hangzhou, Zhejiang 310000 (CN); LI, Zhe, Hangzhou, Zhejiang 310000 (CN); QIN, Xingbin, Hangzhou, Zhejiang 310000 (CN)
(74) Representative: Winter, Brandl - Partnerschaft mbB
(86) International application number: PCT/CN2024/105117
(87) International publication number: WO 2025/016298

(57) **Abstract**

The specification discloses an interactive attack test method, including performing at least one attack on a human-machine identification model deployed in a target terminal including: determining an attack policy based on an attack policy model, where the attack policy includes an action parameter for performing a preset interaction action; grabbing the target terminal by using a robotic arm, and performing the interaction action for the target terminal based on the attack policy, to implement an attack on the human-machine identification model deployed in the target terminal; determining a reward based on a response of the human-machine identification model to the attack; determining environmental information based on attitude data of the target terminal in a process of being attacked; and updating, by using reinforcement learning, the attack policy model based on the reward and the environmental information, to obtain a new attack policy. Correspondingly, the specification discloses an optimization method.

## Description

### TECHNICAL FIELD

The present invention relates to the field of computer technologies, and in particular, to an interactive attack test method and apparatus, and an optimization method and apparatus.

### BACKGROUND

In a scenario of barrier-free human-machine identification, a user may perform a fixed operation, for example, shake, on a mobile terminal device, and then collect sensor data of the mobile terminal device in an action process, to perform human-machine judgment. Such a human-machine judgment mechanism faces a presentation attack, that is, an attacker completes a specified action by using an automatic means such as a robotic arm, to crack the human-machine identification mechanism. Generally, an attack action is imitated by using a robotic arm, attack data is collected, and then the human-machine identification mechanism of the mobile terminal device may be optimized to some extent based on the attack data. However, such attack imitation relies on predefined attack actions, and therefore has a very limited capability of improving the human-machine identification mechanism of the mobile terminal device.

### SUMMARY

An objective of the present invention is to provide an interactive attack test method. The method enables a robotic arm to automatically attack a human-machine identification model, and adjust an attack policy according to a human-machine identification result, thereby effectively improving attack efficiency.

According to the foregoing objective of the present invention, an embodiment of this specification provides an interactive attack test method, including performing at least one attack on a human-machine identification model deployed in a target terminal, where each attack includes: determining an attack policy based on an attack policy model, where the attack policy includes an action parameter for performing a preset interaction action; grabbing the target terminal by using a robotic arm, and performing the interaction action for the target terminal based on the attack policy, to implement an attack on the human-machine identification model deployed in the target terminal; determining a reward based on a response of the human-machine identification model to the attack; determining environmental information based on attitude data of the target terminal in a process of being attacked; and updating, by using reinforcement learning, the attack policy model based on the reward and the environmental information, to obtain a new attack policy.

According to the interactive attack test method provided in this embodiment of this specification, the attack policy is obtained by using the attack policy model, the target terminal is controlled by the robotic arm to execute the attack policy to the human-machine identification model, and the attack policy model is updated according to a result returned by the human-machine identification model and an attitude of the target terminal by using a reinforcement learning method, so that the attack policy model generates a more aggressive attack policy. After several rounds of attacks, the generated attack policy has a wider attack coverage and a stronger attack effect, so that attack resistance of the human-machine identification model can be effectively tested. The process is highly automated, thereby improving test efficiency of the human-machine identification model while reducing costs.

Further, in some implementations, the determining a reward based on a response of the human-machine identification model to the attack specifically includes: determining a reward signal in response to that the human-machine identification model is cracked; or determining a penalty signal in response to that the human-machine identification model is not cracked.

Further, in some implementations, the determining environmental information based on attitude data of the target terminal in a process of being attacked specifically includes: collecting, for each attack by using an attitude sensor, the attitude data of the target terminal in the process of being attacked; and determining, based on the attitude data, an attitude change feature vector of the target terminal in the process of being attacked, and using the attitude change feature vector as the environmental information.

Another objective of the present invention is to provide an optimization method. The method can optimize a human-machine identification model by using collected attack data, to effectively strengthen a capability of the model to defend against a presentation attack.

According to the foregoing objective of the present invention, an embodiment of this specification provides an optimization method, the method including: continuously performing at most N rounds of optimization on a human-machine identification model deployed in a target terminal, until a cracked rate of the human-machine identification model is less than a preset first threshold, where each round of optimization includes: attacking the human-machine identification model by using the method according to any one of the foregoing interactive attack test methods, until an attack policy model satisfying a preset cracking rate condition is obtained; continuously attacking the human-machine identification model based on the attack policy generated by the attack policy model satisfying the preset cracking rate condition, and obtaining attack data that is generated when the human-machine identification model is cracked; and optimizing the human-machine identification model based on the attack data.

According to the optimization method provided in this embodiment of the specification, the attack policy model that can stably generate attack data spontaneously is used to test and optimize an anti-attack capability of the human-machine identification model. During each round of optimization, a human- machine identification model is updated for attack data, to improve a capability of the human-machine identification model to defend against a presentation attack. After several rounds of optimization, a human-machine identification model that can effectively defend against a presentation attack is obtained.

Further, in some implementations, the human-machine identification model is obtained through pre-training in the following manner: obtaining attitude data of the target terminal in a human-machine interaction process as a positive sample, and adding a positive sample label; obtaining attitude data of the target terminal in a machine attack process as a negative sample, and adding a negative sample label; and training a pre-constructed model based on the positive sample, the positive sample label, the negative sample, and the negative sample label, until a human-machine identification model satisfying a preset condition is obtained.

Further, in some implementations, the obtaining an attack policy model satisfying a preset cracking rate condition specifically includes: obtaining a quantity of cracking times of cracking, by the robotic arm, the human-machine identification model within a target period of time based on the current attack policy, and a total quantity of times of implementing the attack; determining a cracking rate based on the quantity of cracking times and the total quantity of times; and determining, based on the cracking rate and a preset second threshold, whether the attack policy model satisfies the cracking rate condition, where the second threshold is greater than the first threshold.

Further, in some implementations, the optimizing the human-machine identification model based on the attack data specifically includes: using the attack data as a negative sample, and adding a negative sample label; and training the human-machine identification model based on the attack data and the negative sample label.

An embodiment of this specification further provides an interactive attack test apparatus, including: an attack policy generation module, configured to determine an attack policy based on an attack policy model; and update, by using reinforcement learning, the attack policy model based on a reinforcement signal fed back by a target terminal, to obtain a new attack policy, where the reinforcement signal includes: environmental information determined based on attitude data of the target terminal in a process of being attacked, and a reward determined based on a response to that a human-machine identification model deployed in the target terminal is attacked; and a robotic arm, configured to grab the target terminal, and apply a corresponding interaction action to the target terminal based on the attack policy generated by the attack policy generation module, to implement an attack on the human-machine identification model.

An embodiment of this specification further provides an optimization apparatus, including: the interactive attack test apparatus described above, a control module, and an optimization module, where the control module is configured to control the interactive attack test apparatus to perform a plurality of rounds of attacks on the human-machine identification model; and continuous attack, for each round of attack when the attack policy model satisfies a preset cracking rate condition, the human-machine identification model based on the attack policy generated by the attack policy model satisfying the preset cracking rate condition, and obtain attack data that is generated when the human-machine identification model is cracked; and the optimization module is configured to optimize the human-machine identification model based on the attack data corresponding to each round of attack, until a cracked rate of the human-machine identification model is less than a preset first threshold.

Further, in some implementations, the optimization module is specifically configured to use the attack data as a negative sample, and add a negative sample label; and train the human-machine identification model based on the attack data and the negative sample label, to optimize the human-machine identification model.

An embodiment of this specification further provides a computer-readable storage medium, having a computer program stored thereon, where when the computer program is executed by a processor, at least one attack is performed on a human-machine identification model deployed in a target terminal, where each attack includes: determining an attack policy based on an attack policy model, where the attack policy includes an action parameter for performing a preset interaction action; controlling a robotic arm to grab the target terminal, and perform the interaction action for the target terminal based on the attack policy, to implement an attack on the human-machine identification model deployed in the target terminal; determining a reward based on a response of the human-machine identification model to the attack; determining environmental information based on attitude data of the target terminal in a process of being attacked; and updating, by using reinforcement learning, the attack policy model based on the reward and the environmental information, to obtain a new attack policy.

An embodiment of this specification further provides an interactive attack test device, including: one or more processors; and a memory associated with the one or more processors, where the memory is configured to store a program instruction, and when the program instruction is read and executed by the one or more processors, the one or more processors are caused to perform at least one attack on a human-machine identification model deployed in a target terminal, where each attack includes: determining an attack policy based on an attack policy model, where the attack policy includes an action parameter for performing a preset interaction action; controlling a robotic arm to grab the target terminal, and perform the interaction action for the target terminal based on the attack policy, to implement an attack on the human-machine identification model deployed in the target terminal; determining a reward based on a response of the human-machine identification model to the attack; determining environmental information based on attitude data of the target terminal in a process of being attacked; and updating, by using reinforcement learning, the attack policy model based on the reward and the environmental information, to obtain a new attack policy.

An embodiment of this specification further provides a computer-readable storage medium, having a computer program stored thereon, where when the computer program is executed by a processor, at most N rounds of optimization are continuously performed on a human-machine identification model deployed in a target terminal, until a cracked rate of the human-machine identification model is less than a preset first threshold, where each round of optimization includes: attacking the human-machine identification model by using the method according to any one of the foregoing interactive attack test methods, until an attack policy model satisfying a preset cracking rate condition is obtained; continuously attacking the human-machine identification model based on the attack policy generated by the attack policy model satisfying the preset cracking rate condition, and obtaining attack data that is generated when the human-machine identification model is cracked; and optimizing the human-machine identification model based on the attack data.

An embodiment of this specification further provides an optimization device, including: one or more processors; and a memory associated with the one or more processors, where the memory is configured to store a program instruction, and when the program instruction is read and executed by the one or more processors, the one or more processors are caused to continuously perform at most N rounds of optimization on a human-machine identification model deployed in a target terminal, until a cracked rate of the human-machine identification model is less than a preset first threshold, where each round of optimization includes: attacking the human-machine identification model by using the method according to any one of the foregoing interactive attack test methods, until an attack policy model satisfying a preset cracking rate condition is obtained; continuously attacking the human-machine identification model based on the attack policy generated by the attack policy model satisfying the preset cracking rate condition, and obtaining attack data that is generated when the human-machine identification model is cracked; and optimizing the human-machine identification model based on the attack data.

Beneficial effects of the interactive attack test method according to the embodiments of this specification are as follows: The robotic arm automatically attacks the human-machine identification model based on the attack policy generated by using the attack policy model, and the attack policy model is updated according to a result returned by the human-machine identification model and an attitude of the target terminal by using reinforcement learning, so that the attack policy model generates a more aggressive attack policy. After several rounds of attacks, the generated attack policy has a wider attack coverage and a stronger attack effect, so that attack resistance of the human-machine identification model can be effectively tested. According to the optimization method described in the embodiments of the specification, the attack policy model that can stably generate attack data spontaneously is used to test and optimize an anti-attack capability of the human-machine identification model. During each round of optimization, a human-machine identification model is updated for attack data, to improve a capability of the human-machine identification model to defend against a presentation attack. After several rounds of optimization, a human-machine identification model that can effectively defend against a presentation attack is obtained.

The interactive attack test apparatus and the optimization apparatus in the embodiments of this specification also have the foregoing beneficial effects.

### BRIEF DESCRIPTION OF THE DRAWINGS

To describe the technical solutions in the embodiments of this specification or the existing technology more clearly, the following briefly describes the accompanying drawings required for describing the embodiments or the existing technology. Apparently, the accompanying drawings in the following description show some embodiments of this specification, and a person of ordinary skill in the art may still derive other drawings from these accompanying drawings without creative efforts.
FIG. 1 is an exemplary schematic diagram of an interactive attack test system according to an embodiment of this specification.
FIG. 2 is an exemplary schematic flowchart of an interactive attack test method in an implementation according to an embodiment of this specification.
FIG. 3 is an exemplary schematic flowchart of an optimization method in an implementation according to an embodiment of this specification.
FIG. 4 is an exemplary structural block diagram of an interactive attack test apparatus in an implementation according to an embodiment of this specification.
FIG. 5 is an exemplary structural block diagram of an optimization apparatus in an implementation according to an embodiment of this specification.
FIG. 6 is an exemplary structural diagram of an electronic device according to an embodiment of this specification.

### DETAILED DESCRIPTION

First, it should be noted that terms used in the embodiments of the present invention are merely for the purpose of describing specific embodiments, and are not intended to limit the present invention. Unless otherwise specified in the context, words, such as "a", "the", and "this", in a singular form in the embodiments of the present invention and the appended claims include plural forms.

To make a person skilled in the art to better understand the technical solutions of this specification, the technical solutions in the embodiments of this specification are described clearly and completely below with reference to the accompanying drawings in the embodiments of this specification. Apparently, the described embodiments are merely some rather than all of the embodiments of this specification. Therefore, a person of ordinary skill in the art should identify that various changes and modifications can be made to the embodiments described herein without departing from the scope and spirit of the present invention. Similarly, for clarity and conciseness, descriptions of well-known functions and structures are omitted in the following descriptions.

It should be noted that steps of a corresponding method are not necessarily performed according to a sequence shown and described in this specification in other embodiments. In some other embodiments, the methods may include more or fewer steps than those described in this specification. In addition, a single step described in this specification may be decomposed into a plurality of steps for describing in other embodiments. A plurality of steps described in this specification may be combined into a single step for describing in other embodiments.

With the development of automation technologies and artificial intelligence technologies, more and more tasks may be calculated by using a trained and optimized model, and an operation result is inputted to a machine, so that the machine simulates a user to perform a corresponding operation. In a scenario of barrier-free human-machine identification, a user may perform a fixed operation on a mobile terminal device, for example, an operation such as red envelope lucky draw or friend matching may be performed on the mobile terminal device by "shake", and then collect sensor data of the mobile terminal device in an action process, to perform human-machine judgment. However, such a human-machine identification mechanism faces a presentation attack, that is, an attacker controls, by using an automatic means such as a robotic arm, a mobile terminal device to be disguised as a user to complete a specified action, to crack the human-machine identification mechanism, easily causing problems such as resource loss and system dysfunction. Generally, an attack action may be imitated by using a robotic arm, attack data is collected, and then the human-machine identification mechanism of the mobile terminal device is tested and optimized to some extent based on the attack data, thereby improving an anti-attack capability of the human-machine identification mechanism. To make such an attack method not rely on predefined attack data, it is expected that a test solution with a wider attack coverage is obtained, so that the human-machine identification mechanism of the mobile terminal device has more space for improvement.

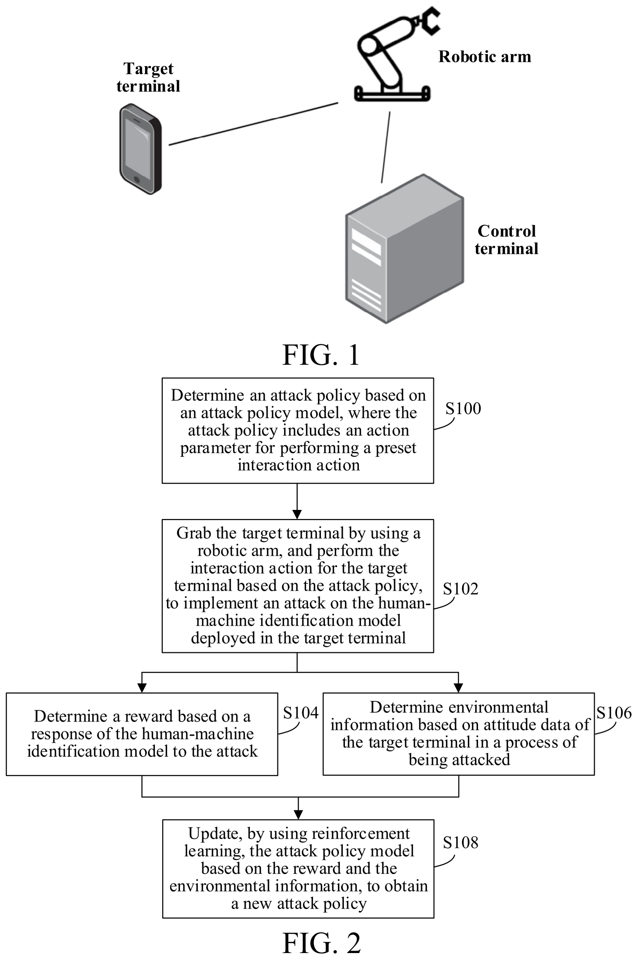

Therefore, one or more embodiments of the present invention provide an interactive attack test method. Referring to FIG. 1, FIG. 1 shows an exemplary interactive attack test system, which may be configured to implement the interactive attack test method. It should be noted that the interactive attack test method according to one or more embodiments of this application may be implemented by relying on the interactive attack test system shown in FIG. 1, but not limited to the interactive attack test system.

As shown in FIG. 1, the interactive attack test system includes a target terminal, a robotic arm, and a control terminal.

The target terminal is grabbed by the robotic arm to perform a corresponding interaction action. The control terminal controls, by using a communication link, the robotic arm to grab the target terminal and perform an interaction action. The communication link may be a wired network, or may be a wireless network. For example, the robotic arm may establish a communication connection to the control terminal in a communication manner such as WiFi, Bluetooth, or infrared. Alternatively, the robotic arm may establish a communication connection to the control terminal by using a mobile network. A network standard of the mobile network may be any one of 2G (GSM), 2.5G (GPRS), 3G (WCDMA, TD-SCDMA, CDMA2000, or UMTS), 4G (LTE), 4G+ (LTE+), WiMAX, and the like.

The target terminal is a mobile terminal, for example, a mobile phone, a notebook computer, or an iPad. A front-end APP having a human-machine identification function is installed in the target terminal. The APP performs human-machine identification based on attitude information of the target terminal by using a human-machine identification model deployed in the target terminal.

The robotic arm executes an attack policy under the control of the control terminal, and implements an attack on the human-machine identification model in the target terminal by grabbing the target terminal to perform a corresponding interaction action in the attack policy.

The control terminal may be a controller built in the robotic arm, or the control terminal may be disposed outside the robotic arm, and is configured to: generate an attack policy according to an attack policy model, and control the robotic arm to execute the attack policy. The control terminal may be any apparatus, device, platform, or device cluster having a computing or processing capability. In this embodiment, an implementation form of the control terminal is not limited. For example, the control terminal may be a single server, or may be a server cluster including a plurality of servers. The control terminal may alternatively be a cloud server, also referred to as a cloud computing server or a cloud host, and is a host product of a cloud computing service system.

Reinforcement learning is a mechanism in which an agent achieves reward maximization or achieves a particular objective by using a learning policy in a process of interacting with an environment. The robotic arm is used as an agent by combining the robotic arm and the reinforcement learning. The control terminal controls, based on the attack policy generated by the attack policy model, the robotic arm to perform an interactive attack on the human-machine identification model in the target terminal, to test an anti-attack capability of the human-machine identification model deployed in the target terminal. Moreover, the control terminal optimizes, based on a received human-machine identification result and related environmental information, the attack policy model deployed in the control terminal, to generate an attack policy that can attack the human-machine identification model more effectively, thereby improving attack efficiency. In addition, the human-machine identification model in the target terminal can continuously perform model optimization by using collected attack data, to have a stronger capability of defending against an attack.

Detailed description is further performed below on the interactive attack test method and apparatus, and the optimization method and apparatus in the embodiments of this specification with reference to the accompanying drawings and specific embodiments of this specification, but the detailed description does not constitute any limitation on the embodiments of this specification.

Corresponding to the foregoing interactive attack test system, in an embodiment of this specification, an interactive attack test method is provided. FIG. 2 is an exemplary schematic flowchart of an interactive attack test method in an implementation according to an embodiment of this specification.

As shown in FIG. 2, the interactive attack test method includes performing at least one attack on a human-machine identification model deployed in a target terminal, where each attack includes the following steps:
S100: Determine an attack policy based on an attack policy model, where the attack policy includes an action parameter for performing a preset interaction action.

The attack policy may be used to determine an action parameter of a preset interaction action performed when an anti-attack test is performed on the human-machine identification model deployed in the target terminal. For example, when the preset interaction action is "shake", the attack policy may include at least one of a shake amplitude, a shake duration, or a shake speed of the target terminal. Different action parameters can present different interaction actions, and therefore correspond to different attack effects. Therefore, the attack policy may be adjusted to achieve a preset attack effect, to test attack resistance of the human-machine identification model more effectively.

The attack policy model is configured to perform a classification task according to inputted different states of a robotic arm, to output a corresponding attack policy to enable the robotic arm to execute the attack policy. During classification, an action parameter of a preset interaction action that the robotic arm needs to perform is determined. In some embodiments, the attack policy model may be constructed based on a neural network model, for example, a Multilayer Perceptron (Multilayer Perceptron, MLP) model. Optionally, model optimization may be performed by using a gradient descent method, to obtain a desired attack policy model simply, conveniently, and quickly.

In some more specific embodiments, the attack policy model is constructed based on a structure of the MLP model, to obtain an MLP attack policy model. A current state of the robotic arm is inputted to the MLP attack policy model, and an attack policy is outputted by using a multi-classification task, where the attack policy includes at least one of a shake amplitude, a shake duration, and a shake speed when the robotic arm grabs the target terminal to perform a "shake" action.

S102: Grab the target terminal by using a robotic arm, and perform the interaction action for the target terminal based on the attack policy, to implement an attack on the human-machine identification model deployed in the target terminal.

The attack policy generated by the attack policy model may be executed by being injected into the robotic arm. The robotic arm grabs the target terminal to perform a corresponding interaction action based on an action parameter determined by the attack policy. For example, the robotic arm grabs the target terminal to perform a "shake" action according to a shake amplitude, a shake duration, or a shake speed determined by the attack policy, to be disguised as a user to interact, and perform at least one attack on the human-machine identification model deployed in the target terminal.

The target terminal includes, but is not limited to, a mobile terminal device equipped with a sensor, such as a smartphone or a smartwatch. The sensor in the target terminal may identify an interaction action by collecting an attitude change status of the target terminal, parse the interaction action to obtain a corresponding action parameter, and further transmit the action parameter to the human-machine identification model in the target terminal, to perform human-machine judgment on an object performing the interaction action. The human-machine identification model may be a binary classification model, and a classification result outputted by the human-machine identification model includes that the object performing the interaction action is a user or a machine.

S104: Determine a reward based on a response of the human-machine identification model to the attack.

For the attack policy executed by the robotic arm to grab the target terminal, the interaction action corresponding to the attack policy is parsed by using the sensor in the target terminal, to obtain sensor data, and the sensor data is inputted to the human-machine identification model to obtain a response. That is, whether the execution object is a user or a machine is determined by the human-machine identification model. If it is determined that the execution object is a user, the robotic arm is disguised as a user to attack successfully, and the human-machine identification model is cracked. In other words, the human-machine identification model cannot complete accurate human-machine judgment. Otherwise, if a determining result is that the execution object is a machine, the human-machine identification model is not cracked, and the human-machine identification model can identify a forged attack of the robotic arm.

In some embodiments, the determining a reward based on a response of the human-machine identification model to the attack specifically includes: determining a reward signal in response to that the human-machine identification model is cracked; or determining a penalty signal in response to that the human-machine identification model is not cracked.

When the human-machine identification model is cracked, it indicates that the attack policy generated by the attack policy model is successfully disguised as the user to complete an attack. The attack policy has a particular attack effect. Therefore, the reward signal is determined to mark an action parameter that is included in the attack policy and that can perform an effective attack.

However, when the human-machine identification model is not cracked, it indicates that the simulation performance of the attack policy is not strong enough to effectively attack the human-machine identification model. Therefore, the penalty signal is determined to mark an action parameter with weak aggression.

The reward signal or the penalty signal that is determined based on the response of the human-machine identification model to the attack helps optimize the attack policy, so that historical attack data may be referred to and learned by the human-machine identification model in a process of updating the attack policy, thereby generating an attack policy that is more aggressive and has a wider attack coverage, to more effectively test a capability of the human-machine identification model in the target terminal to defend against a presentation attack.

S106: Determine environmental information based on attitude data of the target terminal in a process of being attacked.

In some embodiments, the determining environmental information based on attitude data of the target terminal in a process of being attacked specifically includes: collecting, for each attack by using an attitude sensor, the attitude data of the target terminal in the process of being attacked; and determining, based on the attitude data, an attitude change feature vector of the target terminal in the process of being attacked, and using the attitude change feature vector as the environmental information.

In each process of being attacked, the attitude data of the target terminal reflects a rotation or displacement change status of the target terminal on various directional axes, and may be collected by the attitude sensor in the target terminal, and the attitude change feature vector corresponding to the attitude data is further extracted as the environmental information. The environmental information can represent a situation in which the target terminal is controlled by the robotic arm to perform the interaction action under the attack policy generated by the attack policy model, and reflects an implementation effect of the attack policy.

S108: Update, by using reinforcement learning, the attack policy model based on the reward and the environmental information, to obtain a new attack policy.

The reinforcement learning is a mechanism in which an agent achieves reward maximization or achieves a particular objective by using a learning policy in a process of interacting with an environment. In this embodiment of this specification, the robotic arm is used as an agent, and the environmental information and the reward are determined based on data returned by attacking the human-machine identification model deployed in the target terminal. In a process of testing interaction between the robotic arm and the human-machine identification model, the attack policy model continuously learns and is updated, to generate a more effective attack policy, to obtain an attack policy model that can stably crack the human-machine identification model, thereby combining the robotic arm and the reinforcement learning.

In some specific embodiments, the attack policy model may be optimized by using a PPO reinforcement learning method.

In the PPO method, the robotic arm as an Agent is configured to: perform an interaction action corresponding to the attack policy generated by the attack policy model, to attack the human-machine identification model deployed in the target terminal; a reward is determined according to an identification result returned by the human-machine identification model, to mark an action parameter that can effectively crack the human-machine identification model; environmental information is determined according to the attitude data of the target terminal, to determine a state of the robotic arm and an effect of attacking the target terminal; and a cross-entropy loss is determined based on the reward and the environmental information, the attack policy model is updated with a target of minimizing the loss, a new attack policy is generated, the robotic arm grabs the target terminal to execute the new attack policy, and the human-machine identification model is attacked again. The foregoing steps are repeated, so that the attack policy model continuously learns, based on the reward signal, the action parameter that can effectively crack the human-machine identification model, and a cracking rate is improved in one interactive attack test after another, until an attack policy model that can stably crack the human-machine identification model is obtained, thereby completing optimization of the attack policy model.

In the interactive attack test method provided in this embodiment of this specification, the robotic arm grabs the target terminal to execute a corresponding attack policy, and performs at least one attack on the human-machine identification model deployed in the target terminal. During each attack, a corresponding attack policy is generated by the attack policy model, and includes an action parameter of an interaction action that needs to be performed; the human-machine identification model makes a judgment about the received attack, determines a reward corresponding to the current attack policy based on the judgment, and determines environmental information according to an attitude of the target terminal; and the attack policy is updated based on the reward and the environmental information, and the robotic arm performs a next round of attack according to the new attack policy. Such repetition is made until an attack policy model that can stably crack the human-machine identification model is obtained. The attack data is generated by the attack policy model, so that the robotic arm may spontaneously attack the human-machine identification model, thereby facilitating implementation of a highly automated interactive attack test, and the attack coverage is effectively improved.

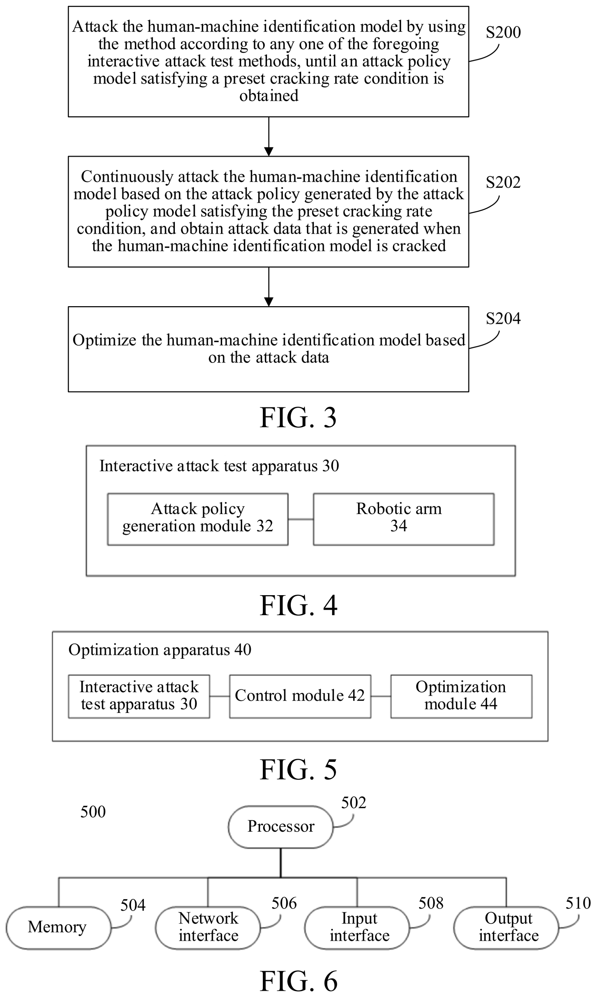

In another embodiment of this specification, an optimization method is provided. FIG. 3 is an exemplary schematic flowchart of an optimization method in an implementation according to an embodiment of this specification.

As shown in FIG. 3, the method includes: continuously performing at most N rounds of optimization on a human-machine identification model deployed in a target terminal, until a cracked rate of the human-machine identification model is less than a preset first threshold, where each round of optimization includes the following steps:
S200: Attack the human-machine identification model by using the method according to any one of the foregoing interactive attack test methods, until an attack policy model satisfying a preset cracking rate condition is obtained.

In some embodiments, the human-machine identification model is obtained through pre-training in the following manner: obtaining attitude data of the target terminal in a human-machine interaction process as a positive sample, and adding a positive sample label; obtaining attitude data of the target terminal in a machine attack process as a negative sample, and adding a negative sample label; and training a pre-constructed model based on the positive sample, the positive sample label, the negative sample, and the negative sample label, until a human-machine identification model satisfying a preset condition is obtained.

The positive sample includes data of an interaction action that a user holds the target terminal to perform, and the negative sample includes data of an interaction action that a robotic arm grabs the target terminal to perform based on an attack policy. The positive sample or the negative sample as a training sample is respectively inputted to the human-machine identification model for human-machine judgment, and a difference between an obtained judgment result and the positive sample label or the negative sample label is calculated, to train the human-machine identification model with a target of minimizing the difference.

In some more specific embodiments, the human-machine identification model may be constructed based on an RNN model, for example, the human-machine identification model may be constructed based on an LSTM network structure.

A positive sample and a corresponding positive sample label are obtained, the positive sample, that is, attitude data of the target terminal in a human-machine interaction process, is inputted to an LSTM human-machine identification model to obtain an identification result, and a cross-entropy loss is calculated based on the identification result and the positive sample label as a first loss; a negative sample and a corresponding negative sample label are obtained, the negative sample, that is, attitude data of the target terminal in a machine attack process, is inputted to the LSTM human-machine identification model to obtain an identification result, and a cross-entropy loss is calculated based on the identification result and the negative sample label as a second loss; and an identification loss is calculated according to the first loss and the second loss, to train the LSTM human-machine identification model with a target of minimizing the identification loss.

Certainly, in another embodiment, alternatively, the human-machine identification model may be constructed based on a CNN model such as a ResNet model, or based on a Transformer model.

The pre-trained human-machine identification model has a particular anti-attack capability. For further optimization, more aggressive attack data needs to be obtained. Therefore, the attack policy model obtained through optimization by using the foregoing interactive attack test method needs to satisfy a particular cracking rate, so that an effective attack can be performed on the human-machine identification model, and the human-machine identification model obtains stronger attack resistance based on this learning.

In some embodiments, the obtaining an attack policy model satisfying a preset cracking rate condition specifically includes: obtaining a quantity of cracking times of cracking, by the robotic arm, the human-machine identification model within a target period of time based on the current attack policy, and a total quantity of times of implementing the attack; determining a cracking rate based on the quantity of cracking times and the total quantity of times; and determining, based on the cracking rate and a preset second threshold, whether the attack policy model satisfies the cracking rate condition, where the second threshold is greater than the first threshold.

The cracking rate is a ratio of the quantity of cracking times of cracking the human-machine identification model based on the current attack policy within the target period of time to the total quantity of times of implementing the attack, and can reflect strength of an attack effect of the attack policy on the human-machine identification model. The preset second threshold indicates a threshold of a lowest cracking rate that the attack policy generated by the attack policy model needs to reach, and the threshold should be as high as possible. In each round of attack on the human-machine identification model, a cracking rate corresponding to an attack policy executed in this round is calculated and compared with the second threshold. If the cracking rate is greater than the second threshold, the attack policy model satisfies the cracking rate condition, and does not need to continue to be updated; otherwise, the attack policy is updated to continue to perform a next round of attack.

The first threshold indicates a threshold of a highest cracked rate that the human-machine identification model can bear, and should be as low as possible. The cracked rate of the optimized human-machine identification model needs to be below the first threshold to stably defend against an attack. Therefore, the second threshold is greater than the first threshold.

S202: Continuously attack the human-machine identification model based on the attack policy generated by the attack policy model satisfying the preset cracking rate condition, and obtain attack data that is generated when the human-machine identification model is cracked.

The attack data includes attitude data of the target terminal in a process in which the robotic arm grabs, based on the attack policy, the target terminal to attack the human-machine identification model, and can reflect a rotation or displacement change status of the target terminal on various directional axes.

S204: Optimize the human-machine identification model based on the attack data.

The human-machine identification model is pre-trained and has particular attack resistance. However, facing an attack policy model with a wider attack coverage and stronger aggression, the human-machine identification model needs to be further optimized for several rounds.

In some embodiments, the optimizing the human-machine identification model based on the attack data specifically includes: using the attack data as a negative sample, and adding a negative sample label; and training the human-machine identification model based on the attack data and the negative sample label.

The attack data as the negative sample is inputted to a pre-trained human-machine identification model for human-machine judgment, and a cracked rate of the human-machine identification model under the current attack policy, that is, a ratio of the quantity of times of cracking the human-machine identification model by the current attack policy within a target period of time to the total quantity of times of being attacked, is calculated based on a difference between an obtained judgment result and the negative sample label. During each round of optimization of the human-machine identification model, the cracked rate of the human-machine identification model is compared with the first threshold. If the cracked rate is less than the first threshold, the human-machine identification model can stably defend against an attack from the robotic arm, and can have the optimization completed. Otherwise, a next round of optimization continues to be performed.

In some more specific embodiments, the human-machine identification model constructed based on an RNN model may be optimized, for example, the human-machine identification model constructed based on an LSTM network structure may be optimized.

Certainly, in another embodiment, alternatively, the human-machine identification model constructed based on a CNN model such as a ResNet model or based on a Transformer model may be optimized.

According to the optimization method provided in this embodiment, the human-machine identification model is spontaneously and continuously attacked by using the attack policy model that satisfies the cracking rate condition and that is obtained by using the foregoing interactive attack test method, and the human-machine identification model is optimized based on the attack data until the cracked rate of the human-machine identification model is lower than a preset cracked rate, thereby effectively improving, through model optimization, a capability of the human-machine identification model to defend against an attack.

In another embodiment of this specification, an interactive attack test apparatus is further provided. FIG. 4 is an exemplary structural block diagram of an interactive attack test apparatus in an implementation according to an embodiment of this specification.

As shown in FIG. 4, the interactive attack test apparatus 30 includes: an attack policy generation module 32, configured to determine an attack policy based on an attack policy model; and update, by using reinforcement learning, the attack policy model based on a reinforcement signal fed back by a target terminal, to obtain a new attack policy, where the reinforcement signal includes: environmental information determined based on attitude data of the target terminal in a process of being attacked, and a reward determined based on a response to that a human-machine identification model deployed in the target terminal is attacked; and a robotic arm 34, configured to grab the target terminal, and apply a corresponding interaction action to the target terminal based on the attack policy generated by the attack policy generation module 32, to implement an attack on the human-machine identification model.

The attack policy may be used to determine an action parameter of a preset interaction action performed when an anti-attack test is performed on the human-machine identification model deployed in the target terminal. For example, when the preset interaction action is "shake", the attack policy may include at least one of a shake amplitude, a shake duration, or a shake speed of the target terminal. Different action parameters can present different interaction actions, and therefore correspond to different attack effects. Therefore, the attack policy may be adjusted to achieve a preset attack effect, to test attack resistance of the human-machine identification model more effectively.

The attack policy model is configured to perform a classification task according to inputted different states of the robotic arm 34, to output a corresponding attack policy to enable the robotic arm 34 to execute the attack policy. During classification, an action parameter of a preset interaction action that the robotic arm 34 needs to perform is determined. In some embodiments, the attack policy model may be constructed based on a neural network model, for example, a Multilayer Perceptron (Multilayer Perceptron, MLP) model. Optionally, model optimization may be performed by using a gradient descent method, to obtain a desired attack policy model simply, conveniently, and quickly.

In some more specific embodiments, the attack policy generation module 32 constructs the attack policy model based on the structure of the MLP model, to obtain an MLP attack policy model. The attack policy generation module 32 inputs a current state of the robotic arm to the MLP attack policy model, and outputs an attack policy by using a multi-classification task, where the attack policy includes at least one of a shake amplitude, a shake duration, and a shake speed when the robotic arm grabs the target terminal to perform a "shake" action.

The attack policy generation module 32 parses an interaction action corresponding to the attack policy by using the sensor in the target terminal, to obtain sensor data, and inputs the sensor data to the human-machine identification model to obtain a response. That is, whether the execution object is a user or a machine is determined by the human-machine identification model. If it is determined that the execution object is a user, the robotic arm 34 is disguised as a user to attack successfully, and the human-machine identification model is cracked. In other words, the human-machine identification model cannot complete accurate human-machine judgment. Otherwise, if a determining result is that the execution object is a machine, the human-machine identification model is not cracked, and the human-machine identification model can identify a forged attack of the robotic arm 34.

In some embodiments, the determining, by the attack policy generation module 32, a reward based on a response of the human-machine identification model to the attack specifically includes: determining, by the attack policy generation module 32, a reward signal in response to that the human-machine identification model is cracked; or determining a penalty signal in response to that the human-machine identification model is not cracked.

When the human-machine identification model is cracked, it indicates that the attack policy generated by the attack policy model is successfully disguised as the user to complete an attack. The attack policy has a particular attack effect. Therefore, the reward signal is determined to mark an action parameter that is included in the attack policy and that can perform an effective attack.

However, when the human-machine identification model is not cracked, it indicates that the simulation performance of the attack policy is not strong enough to effectively attack the human-machine identification model. Therefore, the penalty signal is determined to mark an action parameter with weak aggression.

The reward signal or the penalty signal that is determined based on the response of the human-machine identification model to the attack helps optimize the attack policy, so that historical attack data may be referred to and learned by the attack policy generation module 32 in a process of updating the attack policy, thereby generating an attack policy that is more aggressive and has a wider attack coverage, to more effectively test a capability of the human-machine identification model in the target terminal to defend against a presentation attack.

In some embodiments, the determining, by the attack policy generation module 32, environmental information based on attitude data of the target terminal in a process of being attacked specifically includes: collecting, by the attack policy generation module 32 for each attack by using an attitude sensor, the attitude data of the target terminal in the process of being attacked; and determining, based on the attitude data, an attitude change feature vector of the target terminal in the process of being attacked, and using the attitude change feature vector as the environmental information.

In each process of being attacked, the attitude data of the target terminal reflects a rotation or displacement change status of the target terminal on various directional axes, and may be collected by the attitude sensor in the target terminal, and the attack policy generation module 32 further extracts the attitude change feature vector corresponding to the attitude data as the environmental information. The environmental information can represent a situation in which the target terminal is controlled by the robotic arm 34 to perform the interaction action under the attack policy generated by the attack policy model, and reflects an implementation effect of the attack policy.

In some specific embodiments, the attack policy generation module 32 may optimize the attack policy model by using a PPO reinforcement learning method.

In the PPO method, the robotic arm 34 as an Agent is configured to: perform an interaction action corresponding to the attack policy generated by the attack policy model, to attack the human-machine identification model deployed in the target terminal; the attack policy generation module 32 determines a reward according to an identification result returned by the human-machine identification model, to mark an action parameter that can effectively crack the human-machine identification model; and environmental information is determined according to the attitude data of the target terminal, to determine a state of the robotic arm and an effect of attacking the target terminal; and the attack policy generation module 32 determines a cross-entropy loss based on the reward and the environmental information, updates the attack policy model with a target of minimizing the loss, generates a new attack policy, and attacks the human-machine identification model again. The foregoing steps are repeated, so that the attack policy generation module 32 continuously learns, based on the reward signal, the action parameter that can effectively crack the human-machine identification model, and a cracking rate is improved in one interactive attack test after another, until an attack policy model that can stably crack the human-machine identification model is obtained, thereby completing optimization of the attack policy model.

The robotic arm 34 receives and executes the attack policy injected by the attack policy generation module 32, and grabs the target terminal to perform a corresponding interaction action based on an action parameter determined by the attack policy. For example, the robotic arm 34 grabs the target terminal to perform a "shake" action according to a shake amplitude, a shake duration, or a shake speed determined by the attack policy, to be disguised as a user to interact, and perform at least one attack on the human-machine identification model deployed in the target terminal.

In another embodiment of this specification, an optimization apparatus is further provided. FIG. 5 is an exemplary structural block diagram of an optimization apparatus in an implementation according to an embodiment of this specification.

As shown in FIG. 5, the optimization apparatus 40 includes: the interactive attack test apparatus 30 described above, a control module 42, and an optimization module 44, where the control module 42 is configured to control the interactive attack test apparatus to perform a plurality of rounds of attacks on the human-machine identification model; and continuous attack, for each round of attack when the attack policy model satisfies a preset cracking rate condition, the human-machine identification model based on the attack policy generated by the attack policy model satisfying the preset cracking rate condition, and obtain attack data that is generated when the human-machine identification model is cracked; and the optimization module 44 is configured to optimize the human-machine identification model based on the attack data corresponding to each round of attack, until a cracked rate of the human-machine identification model is less than a preset first threshold.

In some embodiments, the human-machine identification model is obtained through pre-training in the following manner: obtaining attitude data of the target terminal in a human-machine interaction process as a positive sample, and adding a positive sample label; obtaining attitude data of the target terminal in a machine attack process as a negative sample, and adding a negative sample label; and training a pre-constructed model based on the positive sample, the positive sample label, the negative sample, and the negative sample label, until a human-machine identification model satisfying a preset condition is obtained.

The positive sample includes data of an interaction action that a user holds the target terminal to perform, and the negative sample includes data of an interaction action that a robotic arm grabs the target terminal to perform based on an attack policy. The positive sample or the negative sample as a training sample is respectively inputted to the human-machine identification model for human-machine judgment, and a difference between an obtained judgment result and the positive sample label or the negative sample label is calculated, to train the human-machine identification model with a target of minimizing the difference.

In some more specific embodiments, the human-machine identification model may be constructed based on an RNN model, for example, the human-machine identification model may be constructed based on an LSTM network structure.

A positive sample and a corresponding positive sample label are obtained, the positive sample, that is, attitude data of the target terminal in a human-machine interaction process, is inputted to an LSTM human-machine identification model to obtain an identification result, and a cross-entropy loss is calculated based on the identification result and the positive sample label as a first loss; a negative sample and a corresponding negative sample label are obtained, the negative sample, that is, attitude data of the target terminal in a machine attack process, is inputted to the LSTM human-machine identification model to obtain an identification result, and a cross-entropy loss is calculated based on the identification result and the negative sample label as a second loss; and an identification loss is calculated according to the first loss and the second loss, to train the LSTM human-machine identification model with a target of minimizing the identification loss.

Certainly, in another embodiment, alternatively, the human-machine identification model may be constructed based on a CNN model such as a ResNet model, or based on a Transformer model.

The pre-trained human-machine identification model has a particular anti-attack capability. For further optimization, more aggressive attack data needs to be obtained. Therefore, the attack policy model obtained through optimization needs to satisfy a particular cracking rate, so that an effective attack can be performed on the human-machine identification model, and the human-machine identification model obtains stronger attack resistance based on this learning.

In some embodiments, the obtaining, by the control module 42, an attack policy model satisfying a preset cracking rate condition specifically includes: obtaining, by the control module 42, a quantity of cracking times of cracking, by the robotic arm, the human-machine identification model within a target period of time based on the current attack policy, and a total quantity of times of implementing the attack; determining a cracking rate based on the quantity of cracking times and the total quantity of times; and determining, based on the cracking rate and a preset second threshold, whether the attack policy model satisfies the cracking rate condition, where the second threshold is greater than the first threshold.

The cracking rate is a ratio of the quantity of cracking times of cracking the human-machine identification model based on the current attack policy within the target period of time to the total quantity of times of implementing the attack, and can reflect strength of an attack effect of the attack policy on the human-machine identification model. The preset second threshold indicates a threshold of a lowest cracking rate that the attack policy generated by the attack policy model needs to reach, and the threshold should be as high as possible. In each round of attack on the human-machine identification model, the control module 42 calculates a cracking rate corresponding to an attack policy executed in this round and compares the cracking rate with the second threshold. If the cracking rate is greater than the second threshold, the attack policy model satisfies the cracking rate condition, and does not need to continue to be updated; otherwise, the attack policy is updated to continue to perform a next round of attack.

The first threshold indicates a threshold of a highest cracked rate that the human-machine identification model can bear, and should be as low as possible. The cracked rate of the optimized human-machine identification model needs to be below the first threshold to stably defend against an attack. Therefore, the second threshold is greater than the first threshold.

The human-machine identification model is pre-trained and has particular attack resistance. However, facing an attack policy model with a wider attack coverage and stronger aggression, the human-machine identification model needs to be further optimized by the optimization module 44 for several rounds.

In some embodiments, the optimization module 44 is specifically configured to use the attack data as a negative sample, and add a negative sample label; and train the human-machine identification model based on the attack data and the negative sample label, to optimize the human-machine identification model.

The optimization module 44 inputs the attack data as the negative sample to a pre-trained human-machine identification model for human-machine judgment, and calculates, based on a difference between an obtained judgment result and the negative sample label, a cracked rate of the human-machine identification model under the current attack policy, that is, a ratio of the quantity of times of cracking the human-machine identification model by the current attack policy within a target period of time to the total quantity of times of being attacked. During each round of optimization of the human-machine identification model, the cracked rate of the human-machine identification model is compared with the first threshold. If the cracked rate is less than the first threshold, the human-machine identification model can stably defend against an attack from the robotic arm, and can have the optimization completed. Otherwise, a next round of optimization continues to be performed.

In some more specific embodiments, the optimization module 44 may optimize the human-machine identification model constructed based on an RNN model, for example, the human-machine identification model constructed based on an LSTM network structure.

Certainly, in another embodiment, alternatively, the optimization module 44 may optimize the human-machine identification model constructed based on a CNN model such as a ResNet model or based on a Transformer model.

An implementation in this specification further provides a computer-readable storage medium, having a computer program stored thereon, where when the computer program is executed by a processor, at least one attack is performed on a human-machine identification model deployed in a target terminal, where each attack includes: determining an attack policy based on an attack policy model, where the attack policy includes an action parameter for performing a preset interaction action; controlling a robotic arm to grab the target terminal, and perform the interaction action for the target terminal based on the attack policy, to implement an attack on the human-machine identification model deployed in the target terminal; determining a reward based on a response of the human-machine identification model to the attack; determining environmental information based on attitude data of the target terminal in a process of being attacked; and updating, by using reinforcement learning, the attack policy model based on the reward and the environmental information, to obtain a new attack policy.

An implementation in this specification further provides an interactive attack test device, including: one or more processors; and a memory associated with the one or more processors, where the memory is configured to store a program instruction, and when the program instruction is read and executed by the one or more processors, the one or more processors are caused to perform at least one attack on a human-machine identification model deployed in a target terminal, where each attack includes: determining an attack policy based on an attack policy model, where the attack policy includes an action parameter for performing a preset interaction action; controlling a robotic arm to grab the target terminal, and perform the interaction action for the target terminal based on the attack policy, to implement an attack on the human-machine identification model deployed in the target terminal; determining a reward based on a response of the human-machine identification model to the attack; determining environmental information based on attitude data of the target terminal in a process of being attacked; and updating, by using reinforcement learning, the attack policy model based on the reward and the environmental information, to obtain a new attack policy.

An implementation in this specification further provides a computer-readable storage medium, having a computer program stored thereon, where when the computer program is executed by a processor, at most N rounds of optimization are continuously performed on a human-machine identification model deployed in a target terminal, until a cracked rate of the human-machine identification model is less than a preset first threshold, where each round of optimization includes: attacking the human-machine identification model by using the method according to any one of the foregoing interactive attack test methods, until an attack policy model satisfying a preset cracking rate condition is obtained; continuously attacking the human-machine identification model based on the attack policy generated by the attack policy model satisfying the preset cracking rate condition, and obtaining attack data that is generated when the human-machine identification model is cracked; and optimizing the human-machine identification model based on the attack data.

An implementation in this specification further provides an optimization device, including: one or more processors; and a memory associated with the one or more processors, where the memory is configured to store a program instruction, and when the program instruction is read and executed by the one or more processors, the one or more processors are caused to continuously perform at most N rounds of optimization on a human-machine identification model deployed in a target terminal, until a cracked rate of the human-machine identification model is less than a preset first threshold, where each round of optimization includes: attacking the human-machine identification model by using the method according to any one of the foregoing interactive attack test methods, until an attack policy model satisfying a preset cracking rate condition is obtained; continuously attacking the human-machine identification model based on the attack policy generated by the attack policy model satisfying the preset cracking rate condition, and obtaining attack data that is generated when the human-machine identification model is cracked; and optimizing the human-machine identification model based on the attack data.

FIG. 6 is an exemplary structural diagram of an electronic device according to an embodiment of this specification, and shows an exemplary schematic structural diagram of a computer system 500 adapted to implement the terminal device or the server in the embodiments of the present invention. The terminal device or server shown in FIG. 6 is merely an example, and should not bring any limitation to the function and use range of the embodiments of the present invention.

In a typical configuration, the computer system 500 includes one or more processors (CPU) 502, an input interface 508, an output interface 510, a network interface 506, and a memory 504.

The memory 504 may include a form such as a volatile memory, a random-access memory (RAM), and/or a non-volatile memory such as a read-only memory (ROM) or a flash memory (flash RAM) in a computer-readable medium. The memory is an example of the computer-readable medium.

The computer-readable medium includes a non-volatile medium and a volatile medium, a movable medium and a non-movable medium, which may implement storage of information by using any method or technology. The information may be computer-readable instructions, a data structure, a module of a program, or other data. Examples of a storage medium of a computer include, but are not limited to, a Phase-Change Memory (PRAM), a Static Random-Access Memory (SRAM), a Dynamic Random-Access Memory (DRAM), a RAM of another type, a Random Only Memory (ROM), an Electrically Erasable Programmable Read-Only Memory (EEPROM), a Flash Memory or another memory technology, a Compact Disk Read-Only Memory (CD-ROM), a Digital Versatile Disk (DVD) or another optical storage device, a cassette tape, a magnetic disk storage, a quantum memory, a graphene-based storage medium or another magnetic storage device, or any other non-transmission medium, which may be configured to store information accessible by a computing device. Based on the definition in this specification, the computer-readable medium does not include transitory computer-readable media (transitory media) such as a modulated data signal and carrier.

Specific embodiments of this specification are described above. Other embodiments fall within the scope of the appended claims. In some embodiments, the actions or steps recorded in the claims may be performed in sequences different from those in the embodiments and an expected result may still be achieved. In addition, the processes depicted in the accompanying drawings are not necessarily performed in the specific order or successively to achieve an expected result. In some implementations, multitasking and parallel processing are also possible or may be advantageous.

It should be understood that although the terms "first", "second", "third", and the like may be used to describe various information in one or more embodiments of this specification, such information should not be limited to these terms. These terms are merely used to distinguish between information of the same type. For example, without departing from the scope of one or more embodiments of this specification, first information may also be referred to as second information. Similarly, second information may also be referred to as first information. Depending on the context, for example, the word "if" used herein may be interpreted as "while" or "when" or "in response to determination."

It should be noted that, only specific embodiments of the present invention are listed above. Apparently, the present invention is not limited to the foregoing embodiments, and there are many similar variations along with the embodiments. All modifications that can be directly derived or conceived by a person skilled in the art from the content of the present invention should be regarded as falling within the protection scope of the present invention.

## Claims

1. An interactive attack test method, comprising performing at least one attack on a human-machine identification model deployed in a target terminal, wherein each attack comprises:
determining an attack policy based on an attack policy model, wherein the attack policy comprises an action parameter for performing a preset interaction action;
grabbing the target terminal by using a robotic arm, and performing the interaction action for the target terminal based on the attack policy, to implement an attack on the human-machine identification model deployed in the target terminal;
determining a reward based on a response of the human-machine identification model to the attack;
determining environmental information based on attitude data of the target terminal in a process of being attacked; and
updating, by using reinforcement learning, the attack policy model based on the reward and the environmental information, to obtain a new attack policy.

2. The method according to claim 1, wherein determining a reward based on a response of the human-machine identification model to the attack specifically comprises:
determining a reward signal in response to that the human-machine identification model is cracked; and
determining a penalty signal in response to that the human-machine identification model is not cracked.

3. The method according to claim 1, wherein determining environmental information based on attitude data of the target terminal in a process of being attacked specifically comprises:
collecting, for each attack by using an attitude sensor, the attitude data of the target terminal in the process of being attacked; and
determining, based on the attitude data, an attitude change feature vector of the target terminal in the process of being attacked, and using the attitude change feature vector as the environmental information.

4. An optimization method, the method comprising: continuously performing at most N rounds of optimization on a human-machine identification model deployed in a target terminal, until a cracked rate of the human-machine identification model is less than a preset first threshold, wherein each round of optimization comprises:
attacking the human-machine identification model by using the method according to any one of claims 1 to 3, until an attack policy model satisfying a preset cracking rate condition is obtained;
continuously attacking the human-machine identification model based on the attack policy generated by the attack policy model satisfying the preset cracking rate condition, and obtaining attack data that is generated when the human-machine identification model is cracked; and
optimizing the human-machine identification model based on the attack data.

5. The method according to claim 4, wherein the human-machine identification model is obtained through pre-training in the following manner:
obtaining attitude data of the target terminal in a human-machine interaction process as a positive sample, and adding a positive sample label;
obtaining attitude data of the target terminal in a machine attack process as a negative sample, and adding a negative sample label; and
training a pre-constructed model based on the positive sample, the positive sample label, the negative sample, and the negative sample label, until a human-machine identification model satisfying a preset condition is obtained.

6. The method according to claim 4, wherein obtaining an attack policy model satisfying a preset cracking rate condition specifically comprises:
obtaining a quantity of cracking times of cracking, by the robotic arm, the human-machine identification model within a target period of time based on the current attack policy, and a total quantity of times of implementing the attack;
determining a cracking rate based on the quantity of cracking times and the total quantity of times; and
determining, based on the cracking rate and a preset second threshold, whether the attack policy model satisfies the cracking rate condition, wherein the second threshold is greater than the first threshold.

7. The method according to claim 4, wherein optimizing the human-machine identification model based on the attack data specifically comprises:
using the attack data as a negative sample, and adding a negative sample label; and
training the human-machine identification model based on the attack data and the negative sample label.

8. An interactive attack test apparatus, comprising:
an attack policy generation module, configured to determine an attack policy based on an attack policy model; and update, by using reinforcement learning, the attack policy model based on a reinforcement signal fed back by a target terminal, to obtain a new attack policy, wherein the reinforcement signal comprises: environmental information determined based on attitude data of the target terminal in a process of being attacked, and a reward determined based on a response to that a human-machine identification model deployed in the target terminal is attacked; and
a robotic arm, configured to grab the target terminal, and apply a corresponding interaction action to the target terminal based on the attack policy generated by the attack policy generation module, to implement an attack on the human-machine identification model.

9. An optimization apparatus, comprising: the interactive attack test apparatus according to claim 8, a control module, and an optimization module, wherein
the control module is configured to control the interactive attack test apparatus to perform a plurality of rounds of attacks on the human-machine identification model; and continuous attack, for each round of attack when the attack policy model satisfies a preset cracking rate condition, the human-machine identification model based on the attack policy generated by the attack policy model satisfying the preset cracking rate condition, and obtain attack data that is generated when the human-machine identification model is cracked; and
the optimization module is configured to optimize the human-machine identification model based on the attack data corresponding to each round of attack, until a cracked rate of the human-machine identification model is less than a preset first threshold.

10. The apparatus according to claim 9, wherein the optimization module is specifically configured to use the attack data as a negative sample, and add a negative sample label; and train the human-machine identification model based on the attack data and the negative sample label, to optimize the human-machine identification model.

11. A computer-readable storage medium, having a computer program stored thereon, wherein when the computer program is executed by a processor, at least one attack is performed on a human-machine identification model deployed in a target terminal, wherein each attack comprises:
determining an attack policy based on an attack policy model, wherein the attack policy comprises an action parameter for performing a preset interaction action;
controlling a robotic arm to grab the target terminal, and perform the interaction action for the target terminal based on the attack policy, to implement an attack on the human-machine identification model deployed in the target terminal;
determining a reward based on a response of the human-machine identification model to the attack;
determining environmental information based on attitude data of the target terminal in a process of being attacked; and
updating, by using reinforcement learning, the attack policy model based on the reward and the environmental information, to obtain a new attack policy.

12. An interactive attack test device, comprising:
one or more processors; and
a memory associated with the one or more processors, wherein the memory is configured to store a program instruction, and when the program instruction is read and executed by the one or more processors, the one or more processors are caused to perform at least one attack on a human-machine identification model deployed in a target terminal, wherein each attack comprises:
determining an attack policy based on an attack policy model, wherein the attack policy comprises an action parameter for performing a preset interaction action;
controlling a robotic arm to grab the target terminal, and perform the interaction action for the target terminal based on the attack policy, to implement an attack on the human-machine identification model deployed in the target terminal;
determining a reward based on a response of the human-machine identification model to the attack;
determining environmental information based on attitude data of the target terminal in a process of being attacked; and
updating, by using reinforcement learning, the attack policy model based on the reward and the environmental information, to obtain a new attack policy.

13. A computer-readable storage medium, having a computer program stored thereon, wherein when the computer program is executed by a processor, at most N rounds of optimization are continuously performed on a human-machine identification model deployed in a target terminal, until a cracked rate of the human-machine identification model is less than a preset first threshold, wherein each round of optimization comprises:
attacking the human-machine identification model by using the method according to any one of claims 1 to 3, until an attack policy model satisfying a preset cracking rate condition is obtained;
continuously attacking the human-machine identification model based on the attack policy generated by the attack policy model satisfying the preset cracking rate condition, and obtaining attack data that is generated when the human-machine identification model is cracked; and
optimizing the human-machine identification model based on the attack data.

14. An optimization device, comprising: one or more processors; and
a memory associated with the one or more processors, wherein the memory is configured to store a program instruction, and when the program instruction is read and executed by the one or more processors, the one or more processors are caused to continuously perform at most N rounds of optimization on a human-machine identification model deployed in a target terminal, until a cracked rate of the human-machine identification model is less than a preset first threshold, wherein each round of optimization comprises:
attacking the human-machine identification model by using the method according to any one of claims 1 to 3, until an attack policy model satisfying a preset cracking rate condition is obtained;
continuously attacking the human-machine identification model based on the attack policy generated by the attack policy model satisfying the preset cracking rate condition, and obtaining attack data that is generated when the human-machine identification model is cracked; and
optimizing the human-machine identification model based on the attack data.
